# EUROPEAN PATENT APPLICATION

(11) **EP 2 565 426 A1**
(43) Date of publication of application: **06.03.2013**
(21) Application number: 12180668.1
(22) Date of filing: 16.08.2012
(51) Int. Cl.: F02C 9/18, F01D 17/14, F02C 9/16

(54) **Cooling flow control module for a turbomachine**

(30) Priority: 29.08.2011 US 201113220008
(71) Applicant: General Electric Company, Schenectady, NY 12345 (US)
(72) Inventor: Kirtley, Kevin Richard, Greenville, SC South Carolina 29615 (US)
(74) Representative: Cleary, Fidelma

(57) **Abstract**

A flow control module (40) for a turbomachine includes an inlet (44) extending to an outlet (45) through a flow passage (47) having at least one side wall. A flow control member (80) is arranged within the flow control module (40). The flow control member (80) is secured to the at least one side wall between the inlet (44) and the outlet (45). The flow control member (80) is selectively passively activated to extend into the flow passage (47) to block cooling fluid passing through the flow control module (40).

## Description

### BACKGROUND OF THE INVENTION

The subject matter disclosed herein relates to the art of turbomachines and, more particularly, to a passively controlled flow control module that guides a cooling fluid flow toward a turbine rotor shaft.

Gas turbomachines include rotating components that may be subjected to high temperatures. In a turbine, rotor components are subjected to high temperatures and temperature gradients that may have a detrimental effect on system performance and durability. In order to enhance system performance and extend component life, turbomachines include cooling air systems that deliver compressor discharge air toward the rotor components. Typically, the compressor discharge air is passed from a compressor discharge plenum onto a turbomachine rotor. Rotation of the rotor imparts movement to the compressor discharge air resulting in migration toward other rotor components. Rotating component cooling needs vary for various operating conditions. During part load operation, less cooling may be required. Also, less cooling may be required when ambient air temperatures are lower than normal operating conditions.

Current systems for delivering cooling air toward the rotor include direct injection of compressor discharge air to the rotor, and passing the compressor discharge air through a plurality of injectors distributed about a longitudinal axis of the turbomachine. Direct injection does not provide much control over the compressor discharge air. That is, direct injection does not provide much flexibility in varying the compressor discharge air to accommodate various operating conditions. Injectors can be controlled to change delivery of the cooling air based on operating conditions. In some cases, a bimetallic strip is incorporated into the injector to control air flow. Changes in temperature cause the bimetallic strip to expand and contract thereby changing a discharge opening and altering cooling flow delivery. Often times, the bimetallic strip pivots a trailing edge portion of the injector to control cooling flow delivery.

### BRIEF DESCRIPTION OF THE INVENTION

According to one aspect, the invention resides in a flow control module for a turbomachine includes an inlet extending to an outlet through a flow passage having at least one side wall. A flow control member is arranged within the flow control module. The flow control member is secured to the at least one side wall between the inlet and the outlet. The flow control member is selectively passively activated to extend into the flow passage to block fluid passing through the flow control module.

According to another aspect, the invention resides in a turbomachine includes a compressor portion having a compressor discharge, and a turbine portion having a first stage. The first stage includes a wheel space portion, a shaft extending through the wheel space portion, a rotor mounted to the shaft, and at least one bucket mounted to the rotor. A flow control module is arranged down stream from the compressor discharge and upstream from the first stage of the turbine. The flow control module includes an inlet extending to an outlet through a flow passage having at least one side wall. The inlet is fluidly connected to the compressor discharge and the outlet is fluidly connected to the wheel space portion. A flow control member is arranged within the flow control module. The flow control member is secured to the at least one side wall between the inlet and the outlet. The flow control member is selectively passively activated to extend into the flow passage to block cooling fluid passing through the flow control module.

According to yet another aspect, the invention resides in a method of passively controlling flow passing from a compressor discharge toward a turbine rotor includes guiding an air flow from a compressor discharge toward a flow control module positioned upstream of a turbine wheel space, passing the air flow through a flow passage extending through the flow control module, and collapsing a first side wall forming the flow passage toward a second side wall forming the flow passage to constrict the flow control module based on a characteristic of the air flow.

These and other advantages and features will become more apparent from the following description taken in conjunction with the drawings.

### BRIEF DESCRIPTION OF THE DRAWING

Embodiments of the present invention will now be described, by way of example only, with reference to the accompanying drawings in which:
FIG. 1 is a partial cross-sectional view of a turbomachine including a flow control module in accordance with an exemplary embodiment;
FIG. 2 is a perspective view of a flow control module including a flow control member in accordance with an exemplary embodiment;
FIG. 3 is cross-sectional view of the flow control module of FIG. 2 illustrating the flow control member in a first position;
FIG. 4 is a cross-sectional view of the flow control module of FIG. 2 illustrating the flow control member in a second position; and
FIG. 5 is a cross-sectional view of a flow control module in accordance with another aspect of the exemplary embodiment.

The detailed description explains embodiments of the invention, together with advantages and features, by way of example with reference to the drawings.

### DETAILED DESCRIPTION OF THE INVENTION

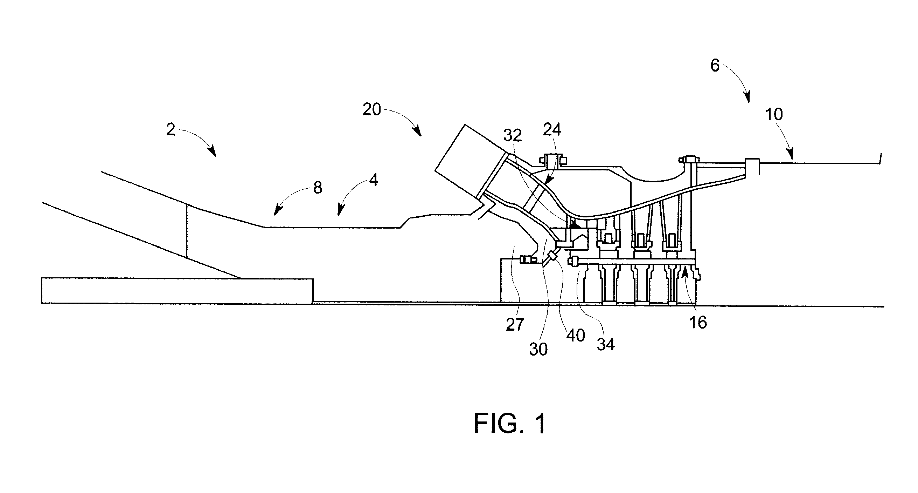

With reference to FIG. 1, a turbomachine constructed in accordance with an exemplary embodiment is indicated generally at 2. Turbomachine 2 includes a compressor portion 4 and a turbine portion 6. Compressor portion 4 includes a compressor housing 8 and turbine portion 6 includes a turbine housing 10. Compressor portion 4 is linked to turbine portion 6 through a common compressor/turbine shaft or rotor 16. Compressor portion 4 is also linked to turbine portion 6 through a plurality of circumferentially spaced combustor assemblies, one of which is indicated at 20. Combustor assembly 20 is fluidly connected to turbine portion 6 by a transition piece 24. Compressor portion 4 includes a compressor discharge plenum 27 that leads to a diffuser 30.

Compressed air flows from compressor portion 4 into compressor discharge plenum 27 passes through diffuser 30 and into combustor assembly 20. The compressed air mixes with fuel to form a combustible mixture that is combusted to form hot gases. The hot gases flow through transition piece 24 along a hot gas path (not separately labeled) toward a first stage 32 of turbine portion 6. In addition to passing to combustor assembly 20, a portion of the compressed air forms an air flow that is passed to a wheel space 34 in turbine portion 6. In accordance with one aspect of the exemplary embodiment, the air flow represents cooling air passing into turbine portion 6.

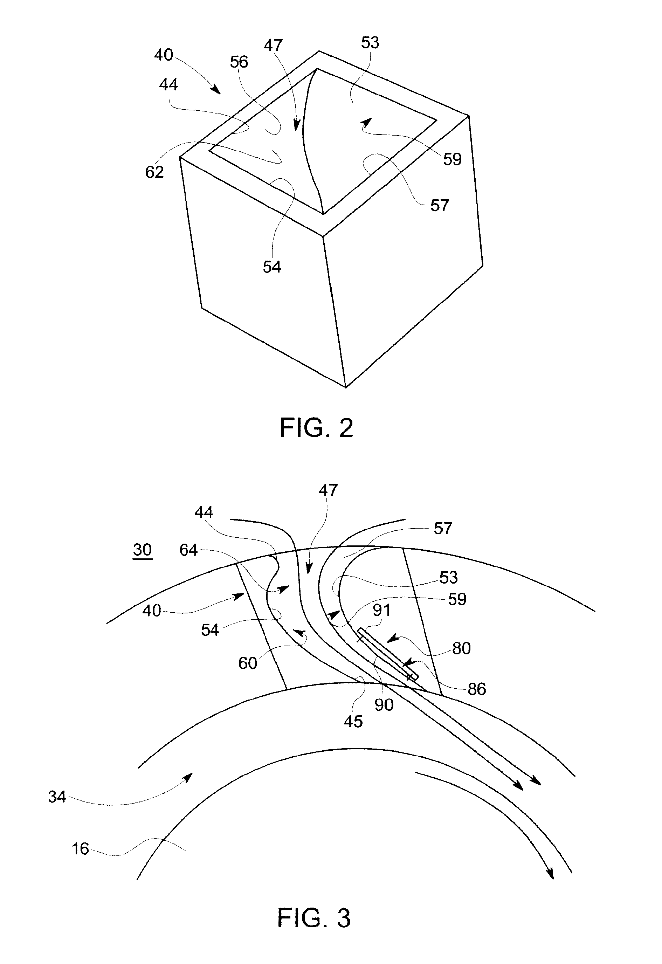

In accordance with an exemplary embodiment, the air flow passes from diffuser 30 through a flow control module 40 into wheel space 34. As best shown in FIGs. 2-3, flow control module 40 includes an inlet 44 that leads to an outlet 45 through a flow passage 47. Flow passage 47 includes first and second opposing side walls 53 and 54 that are joined by third and fourth opposing side walls 56 and 57. First side wall 53 includes a curvilinear surface portion 59. Similarly, second side wall 54 includes a curvilinear surface portion 60. Third and fourth side walls 56 and 57 include substantially linear surfaces 62 and 64 respectively. Curvilinear surface portions 59 and 60 are shaped so as to guide the cooling flow from diffuser 30 into wheel space 34 at a desired angle. More specifically, curvilinear surfaces 59 and 60 guide the cooling flow into wheel space 34 so as to pass tangentially across rotor 16. The air flow is guided in a direction corresponding to a direction of rotation of rotor 16. By introducing the air flow in the direction of rotation, losses that would otherwise be associated with the cooling flow impacting rotor 16 at a substantially perpendicular angle are reduced.

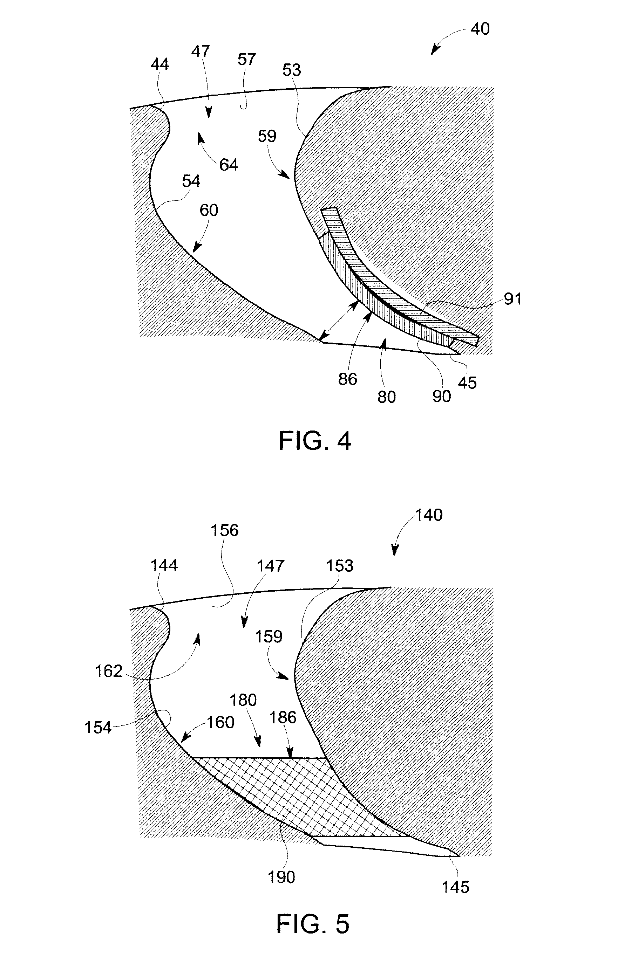

When operating at peak or near peak output, air flow through flow control module 40 is unimpeded so as to enhance cooling. However, during off-peak operation, the amount of air flow passing into wheel space 34 can be reduced. Reducing the amount of air flow passing into wheel space 34 leads to an increase in air flowing to combustor assembly 20 which, in turn, leads to increased operational efficiency at off-peak operation. Accordingly, flow control module 40 includes a flow control member 80 that selectively, passively, extends into flow passage 47 during off-peak operation such as shown in FIG. 4. The term passively should be understood to mean that flow control member 80 extends into flow passage 47 based on a parameter of the air flow, not as a result of a particular control input. In accordance with the exemplary embodiment shown, flow control member 80 includes a bi-metallic element 86 embedded in first side wall 53. Bi-metallic element 86 includes a first member 90 that is joined to a second member 91.

When exposed to particular temperature ranges, first and second members 90 and 91 expand and contract relative to one another. In the present case, when exposed to air flow during peak or near peak operation, first and second members 90 and 91 conform to curvilinear surface portion 59 such as shown in FIG. 3. However, when exposed to air flow during off-peak operations, first member 90 contracts at a rate that is distinct from a rate of contraction of second member 91 resulting in flow control member 80 bulging or extending into flow passage 47 such as shown in FIG. 4. In this manner, flow control member 80 reduces an overall air flow passing to wheel space 34. The reduction in air flow passing into wheel space 34 leads to an increase in compressor flow passing to combustor assembly 20. The increase in compressor flow to combustor assembly 20 leads to more complete combustion at off-peak operation so as to reduce emissions and increase efficiency.

Reference will now be made to FIG. 5 in describing a flow control module 140 in accordance with another aspect of the exemplary embodiment. Flow control module 140 includes an inlet 144 that leads to an outlet 145 through a flow passage 147. Flow passage 147 includes first and second opposing side walls 153 and 154 that are joined by a third side wall 156 and a fourth side wall (not shown). First side wall 153 includes a curvilinear surface portion 159. Similarly, second side wall 154 includes a curvilinear surface portion 160. Third side wall 156 includes a substantially linear or smooth surface 162. Similarly, the fourth side wall (not shown) likewise includes a substantially linear or smooth surface (also not shown). In a manner similar to that described above, curvilinear surface portions 159 and 160 are shaped so as to guide the cooling flow from diffuser 30 into wheel space 34 at an angle.

Flow control module 140 includes a flow control member 180 that selectively, passively, extends into flow passage 147 during off-peak operation. In accordance with the exemplary aspect shown, flow control member 180 includes a bi-metallic element 186 embedded in third side wall 156. More specifically, flow control member 180 extends across or spans flow passage 147 and connects with first and second side walls 153 and 154. Bi-metallic element 186 includes a first member 190 that is joined to a second member (not shown). In a manner similar to that described above, bi-metallic element extends into flow passage 147 during off-peak operation in order to reduce air flow passing into wheel space 34 and increase compressor flow passing to combustor assembly 20 to enhance combustion and reduce emissions.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A flow control module (40) for a turbomachine (2), the flow control module (40) comprising:
an inlet (44) extending to an outlet (45) through a flow passage (47) having at least one side wall; and
a flow control member (80) arranged within the control module (40), the flow control member (80) being secured to the at least one side wall between the inlet (44) and the outlet (45), the flow control member (80) being selectively passively activated to extend into the flow passage (47) to block cooling fluid passing through the flow control module (40).

2. The flow control module (40) according to claim 1, wherein the at least one side wall includes first and second opposing side walls joined by third and fourth opposing side walls (53, 54, 56, 57), each of the first and second opposing side walls (53, 54) having a curvilinear surface (59) that guides cooling flow into the wheel space (34).

3. The flow control module (40) according to claim 2, wherein the flow control member (80) is secured to one of the first and second opposing side walls.

4. The flow control module (40) according to claim 2 or 3, wherein the third and fourth opposing side walls include a substantially linear surface (62).

5. The flow control module (40) according to claim 4, wherein the flow control member (80) is secured to one of the third and fourth opposing side walls.

6. The flow control module (40) according to claim 5, wherein the flow control member (80) extends across the one of the third and fourth side walls and connects with each of the first and second side walls (53, 54).

7. The flow control module (40) according to any preceding claim, wherein the flow control member (80) is embedded in the at least one side wall.

8. The flow control module (40) according to any preceding claim, wherein the flow control member (80) comprises a bi-metallic element (86).

9. A turbomachine (2) comprising:
a compressor portion (4) including a compressor discharge;
a turbine portion (6) including a first stage (32) including wheel space portion (34), a shaft extending through the wheel space portion (34), a rotor mounted to the shaft, and at least one bucket mounted to the rotor; and
the flow control module of any of claims 1 to 8, arranged downstream from the compressor discharge and upstream from the first stage (32) of the turbine, (6) wherein the inlet (44) is fluidly connected to the compressor discharge and the outlet (45) is fluidly connected to the wheel space portion (34).

10. A method of passively controlling an air flow passing from a compressor discharge (4) toward a turbine rotor (6), the method comprising:
guiding an air flow from a compressor discharge (4) toward a flow control module (40) positioned upstream of a turbine wheel space (34);
passing the air flow through a flow passage (47) extending through the flow control module (40); and
collapsing a first side wall (53) forming the flow passage (47) toward a second side wall (54) forming the flow passage (47) to constrict the flow control module (40) based on a characteristic of the air flow.

11. The method of claim 10, further comprising: inducing a swirl to the air flow passing through the flow control module (40).

12. The method of claim 10 or 11, wherein collapsing the first side wall (53) based on the characteristic of the air flow comprises collapsing the first side wall (53) based on a temperature of the air flow.

13. The method of any of claims 10 to 12, wherein collapsing the first side wall (53) based on the characteristic of the air flow comprises contracting a portion of a bi-metallic strip (86) mounted in the flow passage (47).
